## Europäisches Patentamt
## European Patent Office
## Office européen des brevets

(19)

(11) Publication number: **0 206 839**
A2

(12)

# EUROPEAN PATENT APPLICATION

(21) Application number: **86304994.6**

(51) Int. Cl.⁴: **G 01 N 27/02**

(22) Date of filing: **26.06.86**

(30) Priority: **28.06.85 GB 8516389**

(43) Date of publication of application: **30.12.86**
**Bulietin 86/52**

(84) Designated Contracting States: **DE GB**

(71) Applicant: **NATIONAL RESEARCH DEVELOPMENT CORPORATION, 101 Newington Causeway, London SE1 6BU (GB)**

(72) Inventor: **Coles, Gary Stephen Vaughan, 42A St Helens Road, Swansea SA1 4AZ Wales (GB)**
Inventor: **Gallagher, Kevin Joseph, 9 Willowbrook Gardens, Mayals, Swansea SA3 5EB (GB)**
Inventor: **Watson, Joseph, 22 Valley View Sketty, Swansea SA2 8BG Wales (GB)**

(74) Representative: **Davis, Norman Norbridge, Patent Department National Research Development Corporation 101 Newington Causeway, London SE1 6BU (GB)**

(54) **Gas sensors and methods of their fabrication.**

(57) A gas sensor has a detector element of tin(IV) oxide and either aluminium silicate or bismuth oxide. Palladium(II) chloride may be included with the aluminium silicate. Where aluminium silicate is included the sensor is selectively sensitive to methane. Where bismuth oxide is included the sensor is selectively sensitive to carbon monoxide. The constituents of the detector element may be mixed in powdered form with distilled water to form a paste which is applied across a pair of platinum electrode pads on an alumina substrate and sintered. A separate heater element may also be provided.

Sensor leads / Platinum pads / Alumina substrate / Heater leads

126027

GAS SENSORS AND METHODS OF THEIR FABRICATION

This invention relates to gas sensors and methods of fabricating them.

One type of gas sensor comprises a heated tin(IV) oxide element the conductance of which changes in the presence of certain gases. Such sensors have a high sensitivity, fast response, moderate selectivity and long lifetimes. They have a low power consumption of ½ to 1 watt.

According to the invention in one aspect a gas sensor comprises a detector element including tin(IV) oxide and a pair of external electrical connections to the element for enabling the conductance thereof to be measured wherein the element also includes either aluminium silicate or bismuth oxide.

According to the invention in another aspect a method of constructing a gas sensor comprises the steps of mixing tin(IV) oxide with either aluminium silicate or bismuth oxide and sintering the mixture while on an inert substrate.

In order that the invention may be more fully understood reference will now be made to the accompanying drawings in which:-

Figure 1 illustrates an embodiment of the invention,

Figure 2 is a curve showing the relationship between heater power and percentage change of resistance in methane as compared with air,

Figure 3 shows methane sensor conductance change with methane concentration,

Figure 4 is a curve similor to Figure 2 but for a carbon monoxide,

Figure 5 shows the respective changes in conductance of the carbon monoxide sensor to carbon monoxide and methane concentration,

Figure 6 shows the conductance change of the carbon monoxide sensor to carbon monoxide concentration at low levels, and

Figure 7 shows the effect of change in the proportion of bismuth oxide on sensitivity to methane and carbon monoxide respectively.

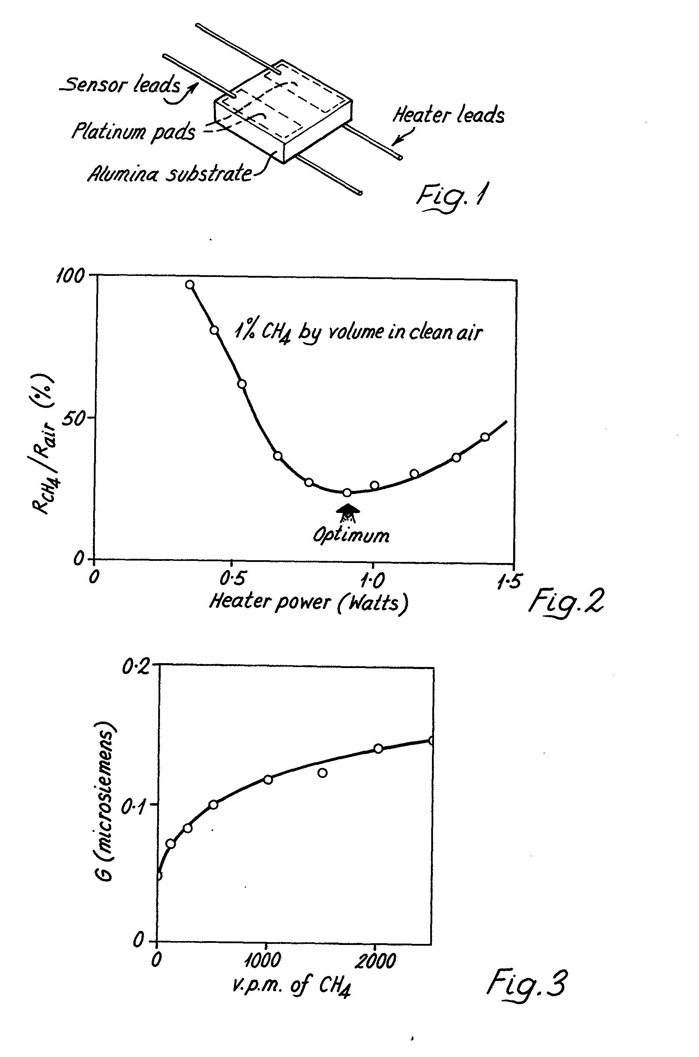

For a methane selective sensor, a mixture of tin(IV) oxide, 36% w/w aluminium silicate and 1.5% w/w palladium(II) chloride is thoroughly ground and mixed with distilled water to give a thick paste. A bead of this paste is applied across the platinum electrode pads of the 3 mm square alumina substrate shown in Figure 1. (The obverse face of this 0.5 mm thick chip has a platinum heater deposition.)

After drying at room temperature, the temperature of the sensor is raised to $1000^{\circ}C$ over a period of two hours, held at this temperature for a further two hours, then cooled over a final period of two hours.

Fabrication of the carbon monoxide sensor is identical, except that 15% w/w of bismuth oxide is added to the tin(IV) oxide in place of the aluminium silicate, and the firing temperature is limited to $800^{\circ}C$.

In order to heat the entire sensor to operating temperatures, a voltage is applied to the platinum heater structure deposited on the obverse side of the alumina chip. Hence, the power supplied to this heater can be determined in terms of this voltage and the resultant current, so that the positive temperature coefficient of the platinum does not confuse the result. It is, however, difficult to relate this to the operating temperature of the sensor, especially since a non-uniform temperature gradient along the active material would be expected.

The conductance of the active material is measured between the two platinum pads (or lands), and this is conveniently performed using a resistance meter which supplies a current too low to cause self-heating. From this, the sensor conductance is determined where needed.

During measurements, the sensor is mounted inside a glass cylinder, which may be filled with a volume of clean dry air with a known proportion of a gaseous contaminant as mixed by a CR Labs. gas blender, all at ambient temperature.

Initial results for samples of the two types of sensor are as set out below:

For the methane sensor Figure 2 shows how the heater power affects the ratio of the sensor resistance in 1% v/v of methane to that in air alone. From it, the optimum heater power is seen to be about 0.9 W (which corresponds to approximately $200^{\circ}$C).

The sensor conductance (which is actually the more logical parameter for measurement in an eventual gas detector instrument (3)), is plotted in Figure 3 against methane concentration in clean dry air. It is interesting to note that the sensitivity is greatest at the low concentration end of the plot, because it is here where the expected response to variations in temperature and humidity would have the most marked (proportional) effects.

The effects of some other gases are listed in Table 1. Here, certain points are noteworthy:

(i)     There is an increasing response when ascending the hydrocarbon scale from methane to butane, and this is thought to be due to the increasing number of hydrogen atoms available for reaction at the active surface of the sensor.

(ii)    The observation that the responses to some common acids, and to ammonia and dimethyl silane, are reversible, implies that permanent poisoning by these contaminants is unlikely. This has obvious commercial connotations.

(iii)   The increase in resistance resulting from exposure to chlorine can be explained in terms of the removal of electrons from the conduction band of the sensor, which may occur during the dissociation of the $Cl_2$ molecule to form two $CL^-$ ions.

(iv) The much more marked response to R22 (chorodifluoro-methane) is probably due to the highly acidic hydrogen in this refrigerant as compared with R12 (dichlorodifluoromethane). This again would have industrial connotations were the sensor to be used as a refrigerant leak detector.

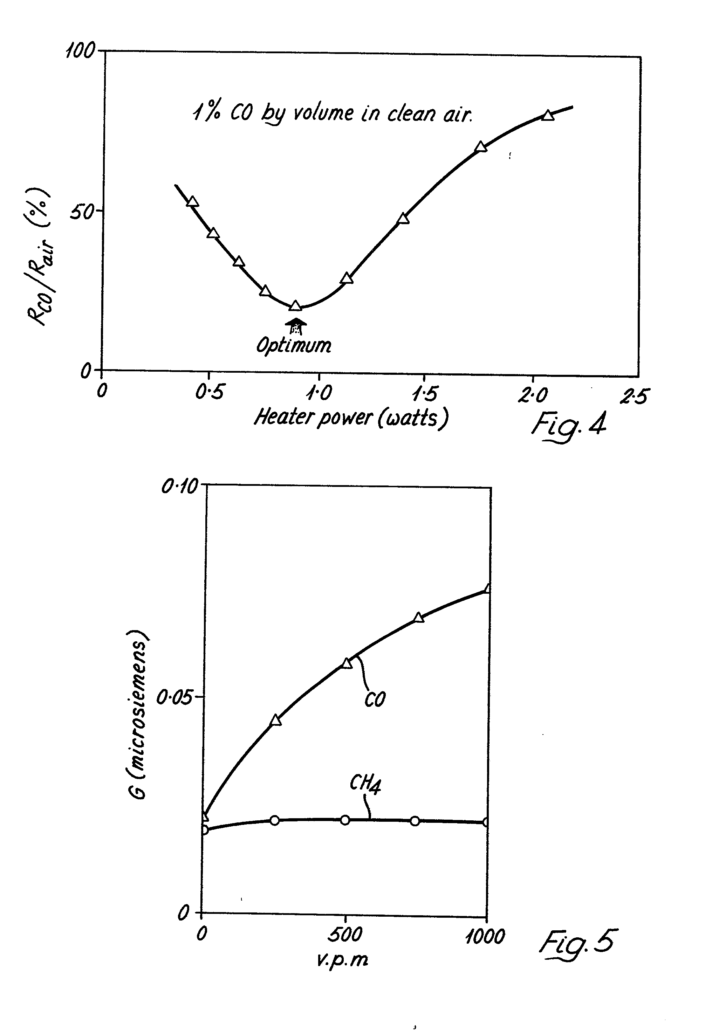

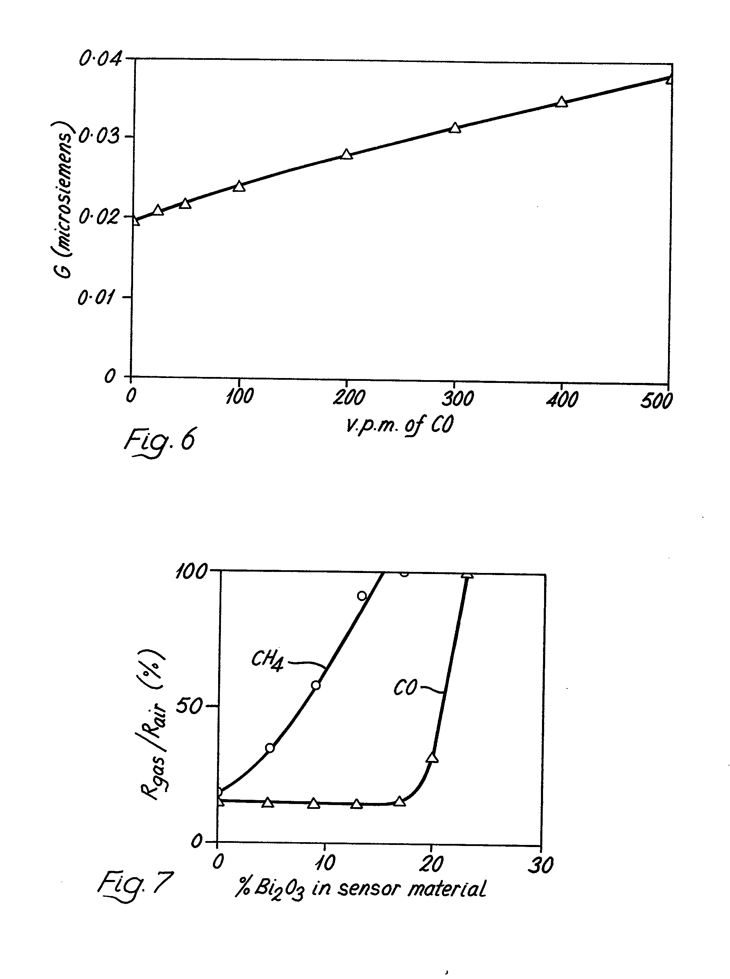

For the carbon monoxide sensor the addition of bismuth oxide not only makes the active slurry easier to sinter, but also appears to confer a marked sensitivity to carbon monoxide. However, this does not change the optimum operating temperature significantly, and this is demonstrated by Figure 4, which shows that the optimum power is gain about 0.9 W. Figure 5 indicates the very marked selectivity of this sensor to carbon monoxide as compared with that to methane. Again, the greatest sensitivity appears at the low concentration end of the measured scale, and the more detailed plot of Figure 6 shows that the conductance is almost directly proportional to gas concentration between 50 and 500 ppm. This demonstrates a reason why conductance is a more appropriate engineering parameter for engineering design (3) than resistance.

These results indicate that the sensor should be useful for the detecting TLV quantities of carbon monoxide; and it has also been found that the response does not 'saturate' even at 12.5% of CO by volume, which is the Lower Explosive Limit.

The following points are relevant to Table 1:

(i) Whereas the sensor response increases with the ascending list of hydrocarbons (as did that of the $CH_4$ sensor), the sensitivity for all is low, and quite negligible for methane.

(ii) This sensor also responds to some of the common acids, again reversibly.

(iii) Again, chlorine leads to an increased resistance.

(iv) For refrigerant R22, dimethyl silane and chlorine, reversion is very slow, but could nevertheless be achieved by heat cycling at 10 V for some 30 seconds.

0206839

- 5 -

Table 1 shows that the 'methane' sensor is actually very sensitive to the hydrocarbons, and that the resistance drop is almost 96% below that in clean air when 1% v/v of carbon monoxide.

This selectivity appears to be conferred by the aluminium silicate inclusion; whereas the converse (selectivity to CO) is conferred by the bismuth oxide inclusion.

The optimum percentages of each are determined empirically, and Figure 7 demonstrates this for the CO-sensitive version. Here, each vertically-displaced pair of points refers to a sensor containing a different percentage of bismuth oxide, and exposed first to 1% v/v of CO, and secondly to 1% v/v of $CH_4$.

The plotted points coalesce on the left (for zero $Bi_2O_3$), then the sensors are seen to become rapidly less sensitive to $CH_4$ as the percentage of $Bi_2O_3$ rises, reaching almost zero at about 15%. The sensitivity to CO then begins to fall at about 17% of $Bi_2O_3$, showing that the optimum mix for maximal selectivity to CO in the presence of $CH_4$ is about 15 - 16% $Bi_2O_3$. This is the proportion used in the CO-selective sensors described above.

It has been shown above that it is possible to tailor the responses of tin-oxide-based gas sensors to achieve some considerable degree of specificity. In the present case, the requirements were the detection and measurement of carbon monoxide in a methane-contaminated atmosphere, and vice versa. The fact that the CO-sensor has proved much superior to the $CH_4$-sensor in this context is a very desirable, albeit serendipitous, result, in that it makes possible the detection of TLV levels of CO in a much higher concentration of methane.

- 6 -

TABLE 1

Response of a methane- and a carbon monoxide-sensitive sensor to other important gases at 1% concentrations by volume in clean air

| Gaseous | Resistance of a $CH_4$- selective sensor in specified gas in M (with % change) | Resistance of a CO- selective sensor in specified gas in M (with % change) |
|---|---|---|
| Clean air | 19.5 | 47.0 |
| Carbon monoxide | 18.9 (3.1%) | 9.6 (79.6%) |
| Methane | 3.4 (82.6%) | 46.2 (1.7%) |
| Ethane | 1.8 (90.8%) | 36.4 (22.6%) |
| Propane | 1.2 (93.8%) | 28.6 (39.1%) |
| Butane | 0.8 (95.9%) | 23.3 (50.4%) |
| R12 Refrigerant ($CCl_2F_2$) | 17.2 | 32.7 |
| R22 Refrigerant ($CHClF_2$) | 7.5 | 5.2 |
| Hydrogen | 0.7 | 4.6 |
| Acetic acid vapour | 0.2 | 0.8 |
| Nitric acid vapour | 5.0 | 8.3 |
| Sulphuric acid vapour | 14.0 | 11.8 |
| Hydrochloric vapour | 0.3 | 3.0 |
| Ammonia vapour | 0.2 | 0.2 |
| Chlorine gas | 40.0 | 100 |
| Dimethyl silane | 0.002 | 0.002 |

149B

0206839

- 7 -

<u>CLAIMS</u>

1. A gas sensor comprising a detector element including tin(IV) oxide and a pair of external electrical connections to the element for enabling the conductance thereof to be measured wherein the element also includes either aluminium silicate or bismuth oxide.

2. The sensor as claimed in Claim 1 in which the element also includes palladium(II) chloride.

3. The sensor as claimed in Claim 2 in which the proportion of aluminium silicate is 36% w/w and of palladium(II) chloride is 1.5% w/w.

4. The sensor as claimed in Claim 1 in which the proportion of bismuth oxide is 15% w/w.

5. The sensor as claimed in any one of the preceding claims in which the element is supported on an alumina substrate.

6. The sensor as claimed in any one of the preceding claims in which the external electrical connections are taken to respective platinum electrode pads and the detector element extends between the pads.

7. The sensor as claimed in any one of the preceding claims in which there are provided heater means for heating the element and separate external electrical connections for supplying electrical heating current to the heater means.

8. A method of constructing a gas sensor comprising the steps of mixing tin(IV) oxide with either aluminium silicate or bismuth oxide and sintering the mixture while on an inert substrate.

9. The method as claimed in Claim 8 in which the mixture is in powdered form and is mixed with distilled water to form a paste which is then applied to the substrate and dried thereon.

10. The method as claimed in Claim 8 or Claim 9 in which the mixture includes aluminium silicate and the sintering takes place at a temperature of $1000^{\circ}C$.

11. The method as claimed in Claim 8 or Claim 9 in which the mixture includes bismuth oxide and sintering takes place at $800^{\circ}$C.

0206839

Sensor leads
Platinum pads
Alumina substrate
Heater leads

Fig. 1

1% $CH_4$ by volume in clean air

$R_{CH_4}/R_{air}$ (%)

Optimum

Heater power (Watts)

Fig. 2

G (microsiemens)

v.p.m. of $CH_4$

Fig. 3

Fig. 4

Fig. 5

Fig. 6

Fig. 7